# EUROPÄISCHE PATENTSCHRIFT

(11) **EP 3 136 918 B1**
(45) Veröffentlichungstag und Bekanntmachung des Hinweises auf die Patenterteilung: **25.08.2021**
(21) Anmeldenummer: 16706319.7
(22) Anmeldetag: 04.02.2016
(51) Int. Cl.: A47J 45/06, A47J 45/07

(54) **BESCHLAGTEIL ZUR BEFESTIGUNG AN EINEM KOCHGESCHIRR**
ATTACHMENT FOR FIXING TO A COOKING UTENSIL
FERRURE À FIXER SUR UN ARTICLE DE CUISSON

(30) Priorität: 11.02.2015 DE 102015202428
(43) Veröffentlichungstag der Anmeldung: 08.03.2017
(73) Patentinhaber: Baumgarten Handle Systems KG, 57290 Neunkirchen (DE)
(72) Erfinder: BAUMGARTEN, Ralf Christian, 57290 Neunkirchen (DE)
(74) Vertreter: advotec.
(86) Internationale Anmeldenummer: PCT/EP2016/052365
(87) Internationale Veröffentlichungsnummer: WO 2016/128286

(56) Entgegenhaltungen:
- EP-A1- 0 449 554
- WO-A1-2013/130365
- GB-A- 390 272
- US-A- 3 119 143

## Beschreibung

Die Erfindung betrifft ein Beschlagteil zur Befestigung an einem Kochgeschirr, beispielsweise einer Bratpfanne oder einem Kochtopf oder einem Kochtopfdeckel, mit einem Anbauteil, das am Kochgeschirr befestigt werden kann, gemäß dem Oberbegriff des Anspruch 1.

Beschlagteile zur Verwendung bei Kochgeschirren sind in vielfältiger Ausführungsform aus dem Stand der Technik bekannt. Einerseits werden hierzu vollständig aus Metall hergestellte Beschlagteile verwendet, bei denen das Anbauteil zur Befestigung am Kochgeschirr und das Griffteil einstückig oder mehrteilig miteinander verschweißt ausgeführt sind. Wenngleich die metallische Ausführungsform einen Vorteil hinsichtlich der Robustheit und der Reinigbarkeit des Beschlagteils aufweist, so ist dies mit einem Nachteil hinsichtlich der komfortablen Handhabung des Kochgeschirrs verbunden. Weiterhin sind aus dem Stand der Technik Ausführungsformen von Beschlagteilen bekannt, bei denen das Anbauteil aus einem metallischen Werkstoff hergestellt ist, während hingegen das Griffteil von einem Spritzgussbauteil gebildet wird. In dieser Ausführungsform ist eine bessere ergonomische Anpassung an die Handform möglich, so dass eine komfortable Handhabung des Kochgeschirrs ermöglicht werden kann. Hierbei kann einerseits vorgesehen sein, dass das Griffteil fest mit dem Anbauteil verbunden ist - wie beispielsweise in der EP 1 477 096 A1 ausgeführt. Ebenso sind beispielsweise aus den Schriften EP 2 249 687 A1 sowie aus der WO 2012/150192 A1 Beschlagteile bekannt, bei denen das Griffteil bestimmungsgemäß vom Anbauteil abgenommen werden kann.

Darüber hinaus sind Ausführungsformen aus dem Stand der Technik bekannt, bei dem sich das am Kochgeschirr zu befestigende Anbauteil, das aus einem metallischen Werkstoff hergestellt ist, als Tragelement innerhalb des Griffteils fortsetzt. Zur komfortablen Handhabung des Kochgeschirrs ist hierbei das Tragelement mit einem weich elastischen Kunststoff umgeben, so dass eine gewisse Anpassung an die jeweilige Handform beim Ergreifen des Griffteils erfolgen kann.

Die EP 0 449 554 A1 beschreibt ein Beschlagteil zur Handhabung eines Haushaltsgeräts. Am Griff dieses Beschlagteils sind verformbare Lamellen angeformt, die eine Grifffläche für den Benutzer bilden.

Wenngleich mit vorgenannter Ausführungsform bereits eine komfortable Handhabung des Kochgeschirrs ermöglicht wird, gilt es dennoch die Ausführungsform hinsichtlich einer sicheren und zugleich komfortablen Handhabung des Kochgeschirrs weiter zu verbessern.

Die gestellte Aufgabe wird durch eine erfindungsgemäße Ausführungsform nach der Lehre des Anspruchs 1 gelöst.

Vorteilhafte Ausführungsformen sind Gegenstand der Unteransprüche.

Das gattungsgemäße Beschlagteil dient zunächst einmal zur Handhabung eines Kochgeschirrs. Hierbei kann es sich beispielsweise um eine Bratpfanne oder einen Kochtopf oder einen Kochtopfdeckel handeln. In welcher Art und Weise das Beschlagteil mit dem Kochgeschirr verbunden wird, ist zunächst unerheblich. Zumindest umfasst das Beschlagteil zunächst einmal ein Tragelement, das biegesteif ausgeführt ist und die Handhabung des Kochgeschirrs beim Ergreifen des Beschlagteils ermöglicht. Hierzu ist das Tragelement unmittelbar oder mittelbar am Kochgeschirr zu befestigen.

Zur komfortablen Handhabung weist das gattungsgemäße Beschlagteil weiterhin einen Verformungsbereich auf, der fest mit dem Tragelement verbunden ist. Aufgrund einer elastischen Verformbarkeit wird eine Anpassung an die Hand des jeweiligen Verwenders ermöglicht.

Eine Verbesserung gegenüber der bekannten Ausführungsform mit einem Verformungsbereich wird erfindungsgemäß gattungsgemäße erzielt, indem zur Bildung des Verformungsbereichs eine Mehrzahl zueinander beabstandeter Lamellen eingesetzt wird. Die jeweiligen Lamellen weisen hierbei jeweils ein Fußende auf, das unmittelbar oder mittelbar am Tragelement befestigt ist. Demgegenüber bildet das vom Tragelement beabstandete Ende der jeweiligen Lamelle ein freies Ende, wobei die Lamellen mit ihren freien Enden nicht miteinander verbunden sind.

Durch die Verwendung einer Mehrzahl nebeneinander angeordneter Lamellen wird eine verbesserte Anpassung an die Hand des jeweiligen Verwenders bei der Gewährleistung eines sicheren Halts des Kochgeschirrs ermöglicht. Darüber hinaus ermöglicht die neuartige Ausführungsform des Verformungsbereichs eine außergewöhnliche Gestaltung des Griffteils, so dass eine charakteristische Unterscheidung zu den üblichen Ausführungsformen von Beschlagteilen möglich wird.

Hierbei ist es weiterhin gattungsgemäß vorgesehen, dass beim Ergreifen des Beschlagteils und der Belastung der elastisch verformbaren Lamellen diese im Bereich des freien Endes aneinander schuppenartig zur Anlage kommen.

Der scheinbare Widerspruch zwischen der vom Fußende zum freien Ende hin reduzierten Materialstärke und dem vom Fußende zum freien Ende reduzierten Abstand wird aufgelöst, wenn erfindungsgemäß Lamellen mit einer gewölbten Gestalt verwendet werden. Hierbei werden die Lamellen mit einer zwischen dem Fußende und dem freien Ende liegenden Wölbung ausgeführt, welche zur Außenseite weisend ausbildet ist. Insofern weisen die Lamellen mit ihrer vorwiegend nach außen weisende Seite eine konvexe Wölbung auf, während hingegen die gegenüber liegende, weitgehend verdeckt liegende Seite der Lamellen konkav gekrümmt ist.

Weiterhin ist es erfindungsgemäß vorgesehen, dass die Lamellen geneigt ausgerichtet sind. Bei Betrachtung von gewölbten Lamellen bezieht sich die Neigung der Lamellen einerseits auf eine gedachte Verbindungslinie zwischen dem Fußende und dem freien Ende der Lamellen. Sofern das Beschlagteil über die Länge des Verformungsbereichs eine längliche Formgebung aufweist, so bezieht sich die Neigung andererseits auf eine gedachte Mittellinie durch das Beschlagteil (zumindest auf der Länge des Verformungsbereichs). Sofern das Beschlagteil bereits eine gewölbte Formgebung aufweist, so bezieht sich die die Neigung anderseits auf eine gedachte Tangente am Beschlagteil jeweils am Fußende der jeweiligen Lamelle. Durch die geneigte Ausführungsform der Lamellen relativ zum Beschlagteil wird die leichte Verformung der Lamellen beim Ergreifen des Beschlagteils ermöglicht.

Eine vorteilhafte Verformbarkeit der Lamellen wird erzielt, wenn diese in bevorzugter Weise jeweils eine Länge vom Fußende bis zum freien Ende zwischen 10 mm und 50 mm aufweisen. Besonders vorteilhaft ist hierbei eine Länge der Lamellen zwischen 15 mm und 35 mm. Somit wird einerseits ein sicherer Halt gewährleistet als auch ebenso die erforderliche Verformbarkeit der Lamellen ermöglicht wird.

Weiterhin wird unter Berücksichtigung der Handhabung des Kochgeschirrs bei Ergreifen des Beschlagteils ein vorteilhafter Halt bei komfortabler Anpassung durch die Elastizität der Lamellen erzielt, wenn die Länge der Lamellen ausgehend von einer ersten Lamelle zumindest bis zu einer mittleren Lamelle (in der Reihe der aufeinander folgenden Lamellen von der ersten Lamelle bis zu einer letzten Lamelle) zunimmt. Dies führt zu einer geringeren Flexibilität der ersten Lamelle und einer größeren Flexibilität der mittleren Lamellen. Hierbei ist es besonders vorteilhaft, wenn die Länge der Lamellen über die mittlere Lamelle hinaus bis zur letzten Lamelle zunimmt. Die Erhöhung der Länge der Lamellen dient insbesondere der Änderung der Elastizität der einzelnen Lamellen, die somit ausgehend von der ersten Lamelle über die mittlere Lamelle bis zur letzten Lamelle zunimmt.

Eine vorteilhafte Formgebung der Lamellen unter Berücksichtigung der Verformung der einzelnen Lamellen wird erzielt, wenn diese am Fußende eine Materialstärke zwischen 2 mm und 6 mm aufweisen, wobei sich die Materialstärke zum freien Ende hin auf einen Wert im Bereich zwischen 1 mm und 3 mm reduziert.

Zur komfortablen Handhabung ist es weiterhin vorteilhaft, wenn der Abstand der Lamellen nicht zu groß gewählt wird, jedoch eine hinreichende Elastizität durch Verformung der einzelnen Lamellen ermöglicht. Dies wird vorteilhaft gewährleistet, wenn der Abstand zwischen zwei Lamellen an deren Fußende zwischen 2 mm und 6 mm beträgt, wobei im unbelasteten Zustand der Abstand zwischen zwei Lamellen am freien Ende zwischen 1 mm und 3 mm beträgt.

Darüber hinaus ist es besonders vorteilhaft, wenn die Neigung der Lamellen ausgehend von der mittleren Lamelle hin zur letzten Lamelle zunimmt und sich somit zunehmend die Ausrichtung der Lamellen an der Ausrichtung des Beschlagteils annähert. Dabei ist es besonders vorteilhaft, wenn die Neigung der Lamellen ausgehend von der ersten Lamelle bis zur letzten Lamelle zunimmt.

Zur Realisierung des am Tragelement befestigten Verformungsbereichs stehen verschiedene Ausführungen zur Verfügung, wobei sich die vorteilhafte Wahl zum einen an die Befestigungsart des Beschlagteils am Kochgeschirr und zum anderen an der geforderten Oberfläche des Beschlagteils richten kann.

Hierzu ist es in einer ersten Ausführungsform besonders vorteilhaft, wenn das Tragelement von einem Griffelement umgeben ist, das den Verformungsbereich einstückig umfasst. Hierzu wird das Griffelement als separates Teil hergestellt und nachfolgend auf dem Tragelement befestigt. Da der Verformungsbereich im Wesentlichen auf Druck beansprucht wird, ist es diesbezüglich unerheblich, dass die Lamellen mit dem Fußende nicht unmittelbar am Tragelement befestigt sind, sondern sich lediglich am Tragelement abstützen. Diese Ausführungsform ist insbesondere in den Fällen zu bevorzugen, wenn das Tragelement aus einem im Wesentlichen flächigen Blechteil hergestellt ist.

In einer zweiten Ausführungsform ist es hingegen besonders vorteilhaft, wenn der Verformungsbereich am Tragelement angespritzt wird. Diese Ausführung kann auch bei Verwendung eines aus Metall hergestellten Tragelements eingesetzt werden. Jedoch wird diese Ausführung insbesondere in den Fällen zu bevorzugen sein, wenn das Tragelement aus einem Kunststoff-Spritzgussbauteil hergestellt wird. Somit kann in einem 2K-Verfahren eine feste Verbindung zwischen dem biegesteifen Tragteil und dem elastisch verformbaren Verformungsbereich realisiert werden.

In der Umsetzung der zweiten Ausführungsform ist es einerseits möglich, den aus einem elastisch verformbaren Material gebildeten Bereich auf die Lamellen zu beschränken. Anderseits können auch weitere Bereiche des Tragteils vom elastisch verformbaren Material überspritzt werden, so dass beispielsweise eine zur Sichtseite geschlossene Oberfläche aus dem elastisch verformbaren Material realisiert wird (und somit dem Erscheinungsbild des montierten Griffelements entspricht).

In der Verwendung beispielsweise als Griff für einen Kochtopfdeckel kann vorgesehen sein, dass das Tragelement unmittelbar am Kochtopfdeckel befestigt wird. Hierzu wird in aller Regel das Tragelement unterseitig mit einer Gewindebohrung versehen, so dass eine Befestigung mit einer den Deckel durchgreifenden Schraube erfolgen kann.

In der Verwendung als Griff für einen Kochtopf sind in aller Regel beidseitig Anbauteile erforderlich, welche am Kochtopf befestigt werden können. Wie die Befestigung des Anbauteils erfolgt, ist hinsichtlich der Realisierung der Erfindung unerheblich. Dies kann beispielsweise durch Schweißen, Löten oder Nieten erfolgen. Zumindest wird in diesen Fällen in aller Regel ein Beschlagteil eingesetzt, bei dem das Tragelement fest mit den Anbauteilen verbunden ist, wobei wiederum in aller Regel eine einstückige Ausführung von Tragelement mit Anbauteilen vorzufinden ist. Jedoch kann das Beschlagteil ebenso realisiert werden, indem an beiden Enden des Tragelements ein Anbauteil angebaut wird.

Bei der Verwendung beispielsweise für eine Bratpfanne weist das Beschlagteil in aller Regel ein Anbauteil auf, welches an der Bratpfanne befestigt wird. Diesbezüglich ist es wiederum unerheblich, ob die bestimmungsgemäße Anbringung an der Bratpfanne durch Schweißen, Löten oder Nieten erfolgt. Gleichfalls wie bei der Ausführung von Beschlagteilen für Kochtöpfe mit zwei Anbauteilen sind Ausführungen möglich, bei denen das Anbauteil fest mit dem Tragelement verbunden ist. Hierzu kann analog vorgesehen sein, dass das Tragelement und das Anbauteil einstückig ausgeführt sind oder dass alternativ das Tragelement - beispielsweise nach Anbringung des Anbauteils am Kochgeschirr - am Anbauteil befestigt wird.

Im Gegensatz zur Verwendung des Griffes für Kochtöpfe mit zwei fest verbundenen Anbauteilen sind jedoch ebenso Ausführungen möglich, bei denen das Tragelement vom Verwender des Kochgeschirrs vom Anbauteil abnehmbar ist. Bei dieser Ausführungsform bildet das Tragelement mit dem Verformungsbereich ein Griffteil, welches vom Verwender bei Bedarf am zum Beschlagteil gehörenden Anbauteil angebracht oder abgenommen werden kann.

Hinsichtlich der Anordnung des Verformungsbereichs ist es besonders vorteilhaft, wenn der Verformungsbereich bei Verwendung des Beschlagteils für einen Kochtopf, eine Bratpfanne oder dergleichen an der Unterseite des Tragelements angeordnet ist. Somit wird ein sicherer Halt des Kochgeschirrs bei Ergreifen des Griffteils und zudem eine komfortable Anpassung an die Hand des jeweiligen Verwenders erzielt.

Weiterhin ist es bei Verwendung des Beschlagteils mit einem einzelnen Anbauteil, d. h. in der Regel für eine Bratpfanne oder dergleichen, besonders vorteilhaft, wenn die freien Enden bei der geneigten Ausrichtung der Lamellen vom Anbauteil wegweisend ausgerichtet sind.

In den nachfolgenden Figuren werden zwei beispielhafte Ausführungsformen für ein erfindungsgemäßes Beschlagteil skizziert.

Es zeigen:
- Fig. 1: eine perspektivische Ansicht auf eine erste Ausführungsform eines Beschlagteils ohne abnehmbarem Griffteil;
- Fig. 2: eine Seitenansicht zu der Ausführungsform aus Fig. 1;
- Fig. 3: eine alternative Ausführungsform eines Beschlagteils mit einem abnehmbaren Griffteil;
- Fig. 4: eine perspektivische Ansicht auf eine Ausführungsform zur Verwendung als Griff für Kochtopfdeckel;
- Fig. 5: eine Seitenansicht zur der Ausführungsform aus Fig. 4.

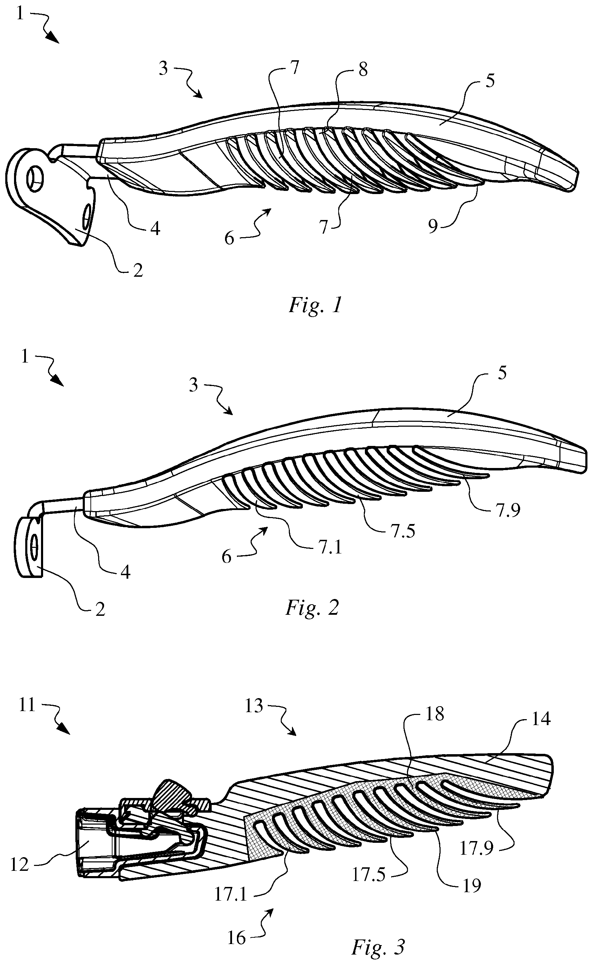

In **Fig. 1** wird eine perspektivische Ansicht auf eine erste beispielhafte Ausführungsform für ein erfindungsgemäßes Beschlagteil 1 skizziert. Hierzu zeigt die **Fig. 2** selbiges 1 in der Seitenansicht. Zu erkennen ist zunächst einmal das Anbauteil 2, das zur Befestigung am Kochgeschirr bestimmt ist. Einstückig mit dem Anbauteil 2 verbunden ist in diesem Ausführungsbeispiel das Tragelement 4, das sich im Wesentlichen über die gesamte Länge des Griffteils 3 erstreckt. Hierbei wird das Tragelement 4 des Griffteils 3 von einem Griffelement 5 überdeckt, so dass für den Verwender lediglich der zum Anbauteil 2 weisende Ansatz des Tragelements 4 sichtbar wird (und in den Figuren zu erkennen ist). Mit dem Griffelement 5 wird eine vorteilhafte Formgebung zur komfortablen Handhabung des Kochgeschirrs realisiert.

Der erfindungsgemäße Verformungsbereich 6 wird nunmehr durch den Einsatz einer Mehrzahl an Lamellen 7 realisiert. Diese 7 sind jeweils mit einem Fußende 8 am Tragelement 4 befestigt. Demgegenüber weisen die einzelnen Lamellen 7 ein freies Ende 9 auf, an denen 9 die Lamellen 7 nicht miteinander verbunden sind. Somit können die einzelnen Lamellen 7 flexibel zueinander verformt werden. Die Realisierung des Verformungsbereichs 6 mit den flexiblen Lamellen 7 erfolgt in diesem Ausführungsbeispiel durch das einstückige Griffelement 5, das einerseits das Tragelement 4 überdeckt und zudem integral den Verformungsbereich 6 bildet.

Darüber hinaus ist zu erkennen, dass die einzelnen Lamellen 7 eine gewölbte Formgebung aufweisen, wobei sich die Wölbung in Richtung des Anbauteils 2 weist, d. h. vom Griffteil wegweisend. Zudem ist insbesondere aus der Fig. 2 zu erkennen, dass die Länge der einzelnen Lamellen ausgehend von der ersten Lamelle 7.1, die dem Anbauteil 2 am nächsten liegt, über die mittlere Lamelle 7.5 bis zur letzten Lamelle 7.9 zunimmt. Darüber hinaus wird zudem die Neigung der einzelnen Lamellen 7 ebenso ausgehend von der ersten Lamelle 7.1 über die mittlere Lamelle 7.5 bis zur letzten Lamelle 7.9 relativ zur Lage des Griffteils 3 gesteigert, wobei sich entsprechend die Lamellen 7 mit zunehmendem Abstand vom Anbauteil 2 an die Ausrichtung des Griffteils 3 annähern.

Eine alternative Ausführungsform für ein erfindungsgemäßes Beschlagteil 11 skizziert die **Fig. 3****.** Im Gegensatz zur vorherigen Ausführungsform ist nunmehr das Griffteil 13 vom Anbauteil 12 lösbar. Hierzu wird beim Griffteil 13 zunächst einmal ein biegesteifes Tragelement 14 eingesetzt. Dieses 14 kann sowohl als Druckgussbauteil oder besonders vorteilhaft als Kunststoff-Spritzgussbauteil hergestellt sein und somit an eine ergonomische Formgebung angepasst werden.

Zur Realisierung eines Verformungsbereichs 16 werden unterseitig im Griffteil 13 eine Mehrzahl von Lamellen 17 am Tragelement 14 angeordnet, die in diesem Ausführungsbeispiel unmittelbar angespritzt sind. Somit wird einerseits eine einfache und vorteilhafte Herstellung ermöglicht, während ebenso ein vorteilhafter Halt gewährleistet ist. Hinsichtlich der Ausrichtung und Formgebung der Lamellen gilt Gleiches wie zuvor gesagt. Die einzelnen Lamellen 17 sind ebenso mit einem Fußende 18 am Tragteil 14 befestigt während das freie Ende 19 der jeweiligen Lamellen nicht miteinander verbunden ist. Ebenso wird die Länge der einzelnen Lamellen als auch die Neigung der Lamellen ausgehend von der dem Anbauteil 12 am nächsten liegenden Lamelle 17.1 über die mittlere Lamelle 17.5 bis zu letzten Lamelle 17.9 gesteigert.

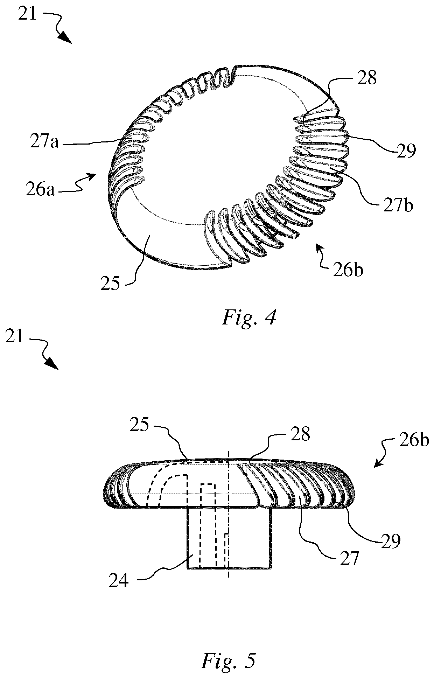

In der **Fig. 4** wird eine weitere Ausführungsform eines Beschlagteils 21 dargestellt, wobei in **Fig. 5** diese 21 in einer Seitenansicht skizziert wird. Zu erkennen ist die runde Gestalt des Beschlagteils 21, welches 21 insbesondere zur Verwendung als Griff für einen Kochtopfdeckel bestimmt ist. Das Beschlagteil 21 wird unterseitig von einem biegesteifen Tragelement 24 gebildet, welches 24 hierzu vorteilhaft als Kunststoff-Spritzguss-Bauteil ausgeführt wird. Das Tragelement 24 kann unmittelbar auf dem Kochtopfdeckel mit einer Schraube befestigt werden. Oberseitig wird das Tragelement 24 von einem Griffelement 25 überdeckt, welches 25 in diesem Fall unmittelbar auf dem Tragelement 24 aufgespritzt ist. Hierbei umfasst das Griffelement 25 einstückig die beiden gegenüberliegenden Verformungsbereiche 26a und 26b.

Jeder Verformungsbereich wird von einer Mehrzahl aufeinander folgenden Lamellen 27a, 27b gebildet, welche 27 wiederum mit einem Fußende 28 am Tragelement 24 befestigt sind. Demgegenüber bilden die dem Fußende 28 gegenüberliegenden Enden der Lamellen 27 jeweils ein freies Ende 29, an denen 29 diese 27 nicht miteinander verbunden sind. Analog der vorhergehenden Beispiele weisen die Lamellen 27 eine gewölbte, vom Tragelement 24 wegweisende Formgebung auf. Ebenso sind die Lamellen 27 relativ zu einer Tangente am Tragelement 24 geneigt ausgerichtet.

## Patentansprüche

1. Beschlagteil (1, 11, 21) zur Handhabung eines Kochgeschirrs, mit einem biegesteifen Tragelement (4, 14), welches (4, 14) unmittelbar oder mittelbar am Kochgeschirr befestigt werden kann, und mit zumindest einem am Tragelement (4, 14) angeordneten elastisch verformbaren Verformungsbereich (6, 16, 26a, 26b),
wobei der Verformungsbereich (6, 16, 26a, 26b) von einer Mehrzahl zueinander beabstandeter Lamellen (7, 17, 27a, 27b) gebildet wird, welche (7, 17, 27a, 27b) jeweils mit einem Fußende (8, 18, 28) unmittelbar oder mittelbar am Tragelement (4, 14) befestigt sind und ein vom Tragelement (4, 14) beabstandetes freies Ende (9, 19, 29) aufweisen, und wobei sich die Lamellen (7, 17, 27) bei Belastung zumindest im Bereich des freien Endes (9, 19, 29) schuppenartig aneinander anlegen
**dadurch gekennzeichnet,**
**dass** die Lamellen (7, 17, 27) zwischen dem Fußende (8, 18, 28) und dem freien Ende (9, 19, 29) nach außen weisend gewölbt ausgeführt sind, wobei die Lamellen (7, 17, 27) geneigt ausgeführt sind.

2. Beschlagteil (1, 11, 21) nach Anspruch 1,
**dadurch gekennzeichnet,**
**dass** die Längen der Lamellen (7, 17, 27) vom Fußende (8, 18, 28) bis zum freien Ende (9, 19, 29) zwischen 10 mm, insbesondere 15 mm, und 50 mm, insbesondere 35 mm, betragen.

3. Beschlagteil (1, 11, 21) nach einem der Ansprüche 1 oder 2,
**dadurch gekennzeichnet,**
**dass** die Länge der aufeinander folgenden Lamellen (7, 17) ausgehend von einer ersten Lamelle (7.1, 17.1), wobei die erste Lamelle (7.1, 17.1) dem Kochgeschirr am nächsten liegt, zumindest bis zur mittleren Lamelle (7.5, 17.5), insbesondere bis zur letzten Lamelle (7.9, 17.9), wobei die letzte Lamelle (7.9, 17.9) von dem Kochgeschirr am weitesten entfernt ist, zunimmt.

4. Beschlagteil (1, 11, 21) nach einem der Ansprüche 1 bis 3,
**dadurch gekennzeichnet,**
**dass** die Lamellen (7, 17, 27) am Fußende (8, 18, 28) eine Materialstärke zwischen 2 mm und 6 mm aufweisen, wobei sich die Materialstärke zum freien Ende (9, 19, 29) hin auf 1 mm bis 3 mm reduziert.

5. Beschlagteil (1, 11, 21) nach einem der Ansprüche 1 bis 4,
**dadurch gekennzeichnet,**
**dass** der Abstand zwischen zwei Lamellen (7, 17, 27) an deren Fußende (8, 18, 28) zwischen 2 mm und 6 mm beträgt, wobei im unbelasteten Zustand der Abstand zwischen zwei Lamellen (7, 17, 27) am freien Ende (9, 19, 29) zwischen 1 mm bis 3 mm beträgt.

6. Beschlagteil (1, 11) nach einem der Ansprüche 1 bis 5,
**dadurch gekennzeichnet,**
**dass** die Neigung der aufeinander folgenden Lamellen (7, 17) ausgehend, insbesondere von der ersten Lamelle (7.1, 17.1), wobei die erste Lamelle (7.1, 17.1) dem Kochgeschirr am nächsten liegt, zumindest ab der mittleren Lamelle (7.5, 17.5) bis zur letzten Lamelle (7.9, 17.9), wobei die letzte Lamelle (7.9, 17.9) von dem Kochgeschirr am weitesten entfernt ist, zunimmt.

7. Beschlagteil (1) nach einem der Ansprüche 1 bis 6,
**dadurch gekennzeichnet,**
**dass** das Tragelement (4) von einem auf diesem (4) befestigtem Griffelement (5) umgeben ist, welches (5) den Verformungsbereich (6) einstückig umfasst.

8. Beschlagteil (11, 21) nach einem der Ansprüche 1 bis 7,
**dadurch gekennzeichnet,**
**dass** das Tragelement (14) als Spritzgussbauteil ausgeführt ist, wobei die Lamellen (17) am Tragelement (14) angespritzt sind; oder
**dass** das Tragelement (14) als Spritzgussbauteil ausgeführt ist, wobei das Tragelement (24) von einem auf diesem (24) im Spritzgussverfahren aufgebrachten Griffelement (25) umgeben ist, welches (25) den Verformungsbereich (26) einstückig umfasst.

9. Beschlagteil (1, 11) nach einem der Ansprüche 1 bis 8,
**dadurch gekennzeichnet,**
**dass** am Tragelement (4, 14) zumindest ein Anbauteil (2, 12) angeordnet ist, welches (2, 12) lösbar oder fest am Kochgeschirr befestigt werden kann.

10. Beschlagteil (1, 11) nach Anspruch 9,
**dadurch gekennzeichnet,**
**dass** die Lamellen (7, 17) mit deren (7, 17) freien Enden (9, 19) vom Anbauteil (02, 12) wegweisend ausgeführt sind.

## Claims

1. An attachment (1, 11, 21) for handling a cooking utensil, the attachment comprising a rigid supporting element (4, 14) which (4, 14) can be fastened directly or indirectly to the cooking utensil, and at least one elastically deformable shaping area (6, 16, 26a, 26b) arranged at the supporting element (4, 14), the shaping area (6, 16, 26a, 26b) being formed by a plurality of lamellas (7, 17, 27a, 27b) which (7, 17, 27a, 27b) are arranged at a distance to each other and are each fastened directly or indirectly at the supporting element (4, 14) with a bottom end (8, 18, 28) and comprise a free end (9, 19, 29) arranged at a distance to the supporting element (4, 14), the lamellas (7, 17, 27) abutting against each other in a scalelike manner at least in the area of the free end (9, 19, 29) upon loading,
**characterized in that**
the lamellas (7, 17, 27) between the bottom end (8, 18, 28) and the free end (9, 19, 29) are curved outward, the lamellas (7, 17, 27) being inclined.

2. The attachment (1, 11, 21) according to claim 1,
**characterized in that**
the length of the lamellas (7, 17, 27) is between 10 mm, in particular 15 mm, and 50 mm, in particular 35 mm, from the bottom end (8, 18, 28) to the free end (9, 19, 29).

3. The attachment (1, 11, 21) according to any one of the claims 1 to 2,
**characterized in that**
starting from a first lamella (7.1, 17.1), which (7.1, 17.1) is closest to the cooking utensil, at least to the middle lamella (7.5, 17.5), in particular to the last lamella (7.9, 17.9), the length of the consecutive lamellas (7, 17) increases.

4. The attachment (1, 11, 21) according to any one of the claims 1 to 3,
**characterized in that**
the lamellas (7, 17, 27) at the bottom end (8, 18, 28) have a material thickness between 2 mm and 6 mm, wherein the material thickness is reduced to 1 mm to 3 mm towards the free end (9, 19, 29).

5. The attachment (1, 11, 21) according to any one of the claims 1 to 4,
**characterized in that**
the distance between two lamellas (7, 17, 27) at the bottom end (8, 18, 28) is between 2 mm and 6 mm, wherein the distance between two lamellas (7, 17, 27) at the free end (9, 19, 29) is between 1 mm to 3 mm when unloaded.

6. The attachment (1, 11) according to any one of the claims 1 to 5,
**characterized in that**
the inclination of the consecutive lamellas (7, 17) increases starting from at least the middle lamella (7.5, 17.5), in particular from the first lamella (7.1, 17.1), which (7.1, 17.1) is closest to the cooking utensil, to the last lamella (7.9, 17.9), which (7.9, 17.9) is farthest from the cooking utensil.

7. The attachment (1) according to any one of the claims 1 to 6, **characterized in that**
the supporting element (4) is surrounded by a handle element (5) which is fastened thereon (4) and which (5) integrally encompasses the shaping area (6).

8. The attachment (11, 21) according to any one of the claims 1 to 7,
**characterized in that**
the supporting element (14) is an injection molded part, wherein the lamellas (17) are injected onto the supporting element (14); or
that the supporting element (14) is an injection molded part, wherein the supporting element (24) is surrounded by a handle element (25) applied thereon (24) via an injection molding process, said handle element (25) integrally encompassing the shaping area (26).

9. The attachment (1, 11) according to any one of the claims 1 to 8,
**characterized in that**
at least one add-on part (2, 12) is arranged at the supporting element (4, 14), said add-on part (2, 12) being able to be attached detachably or permanently to the cooking utensil.

10. The attachment (1, 11) according to claim 9,
**characterized in that**
the lamellas (7, 17) are arranged pointing away from the add-on part (02, 12) with their (7, 17) free ends (9, 19).

## Revendications

1. Pièce de fixation (1, 11, 21) pour le maniement d'un ustensile de cuisine, la pièce de fixation comprenant un élément de support (4, 14) rigide qui (4, 14) peut être fixé directement ou indirectement à l'ustensile de cuisine, et comprenant au moins une zone de façonnage (6, 16, 26a, 26b) déformable élastiquement et disposée sur l'élément de support (4, 14), la zone de façonnage (6, 16, 26a, 26b) étant formée par une pluralité des lamelles (7, 17, 27a, 27b) qui (7, 17, 27a, 27b) sont espacées l'une à l'autre et sont fixées directement ou indirectement à l'élément de support (4, 14) par son extrémité inférieure (8, 18, 28) et comprend une extrémité libre (9, 19, 29) espacée de l'élément de support (4, 14), les lamelles (7, 17, 27) faisant appui l'une contre l'autre de manière écailleuse dans la zone de l'extrémité libre (9, 19, 29) sous charge,
**caractérisée en ce que**
les lamelles (7, 17, 27) entre l'extrémité inférieure (8, 18, 28) et l'extrémité libre (9, 19, 29) sont courbées vers l'extérieur, les lamelles (7, 17, 27) étant inclinées.

2. Pièce de fixation (1, 11, 21) selon la revendication 1, **caractérisée en ce que**
la longueur des lamelles (7, 17, 27) est entre 10 mm, notamment 15 mm, et 50 mm, notamment 35 mm, de l'extrémité inférieure (8, 18, 28) à l'extrémité libre (9, 19, 29).

3. Pièce de fixation (1, 11, 21) selon l'une quelconque des revendications 1 à 2,
**caractérisée en ce**
**qu'**à partir d'une lamelle (7.1, 17.1) première, qui (7.1, 17.1) est la plus prochaine à l'ustensile de cuisine, au moins à la lamelle (7.5, 17.5) moyenne, notamment à la dernière lamelle (7.9, 17.9), qui est la plus loin de l'ustensile de cuisine, la longueur des lamelles (7, 17) consécutives augmente.

4. Pièce de fixation (1, 11, 21) selon l'une quelconque des revendications 1 à 3,
**caractérisée en ce que**
les lamelles (7, 17, 27) à l'extrémité inférieure (8, 18, 28) ont une épaisseur de matériau entre 2 mm et 6 mm, l'épaisseur de matériau étant réduite à 1 mm à 3 mm vers l'extrémité libre (9, 19, 29).

5. Pièce de fixation (1, 11, 21) selon l'une quelconque des revendications 1 à 4,
**caractérisée en ce que**
la distance entre deux lamelles (7, 17, 27) à leur extrémité inférieure (8, 18, 28) est entre 2 mm et 6 mm, la distance entre deux lamelles (7, 17, 27) à l'extrémité libre (9, 19, 29) étant entre 1 mm à 3 mm sous charge.

6. Pièce de fixation (1, 11) selon l'une quelconque des revendications 1 à 5,
**caractérisée en ce que**
l'inclination des lamelles (7, 17) consécutives augmente à partir d'au moins la lamelle (7.5, 17.5) moyenne, notamment à partir de la première lamelle (7.1, 17.1), qui (7.1, 17.1) est la plus prochaine à l'ustensile de cuisine, à la dernière lamelle (7.9, 17.9), qui (7.9, 17.9) est la plus loin de l'ustensile de cuisine.

7. Pièce de fixation (1) selon l'une quelconque des revendications 1 à 6,
**caractérisée en ce que**
l'élément de support (4) est encerclé par un élément de poignée (5) qui (5) est y (4) fixé et qui (5) comprend intégralement la zone de façonnage (6).

8. Pièce de fixation (11, 21) selon l'une quelconque des revendications 1 à 7,
**caractérisée en ce que**
l'élément de support (14) est une pièce de moulage par injection, les lamelles (17) étant moulées sur l'élément de support (14) ; ou
**en ce que** l'élément de support (14) est une pièce de moulage par injection, l'élément de support (24) étant encerclé par un élément de poignée (25) y (24) appliqué par un processus de moulage par injection, l'élément de poignée (25) encerclant intégralement la zone de façonnage (26).

9. Pièce de fixation (1, 11) selon l'une quelconque des revendications 1 à 8,
**caractérisée en ce**
**qu'**au moins une pièce de fixation additionnelle (2, 12) est disposée sur l'élément de support (4, 14), la pièce de fixation additionnelle (2, 12) pouvant être fixée à l'ustensile de cuisine de manière détachable ou permanente.

10. Pièce de fixation (1, 11) selon la revendication 9,
**caractérisée en ce que**
les lamelles (7, 17) sont détournées de la pièce de fixation additionnelle (02, 12) par ses (7, 17) extrémités libres (9, 19).
